(19) Europäisches Patentamt
European Patent Office
Office européen des brevets

(11) Veröffentlichungsnummer: **0 146 908**
**A2**

(12) # EUROPÄISCHE PATENTANMELDUNG

(21) Anmeldenummer: 84115667.2

(51) Int. Cl.[4]: C 08 G 69/12

(22) Anmeldetag: 18.12.84

(30) Priorität: 30.12.83 DE 3347581
05.01.84 DE 3400236

(43) Veröffentlichungstag der Anmeldung:
03.07.85 Patentblatt 85/27

(84) Benannte Vertragsstaaten:
DE FR GB IT NL

(71) Anmelder: BAYER AG
Konzernverwaltung RP Patentabteilung
D-5090 Leverkusen 1 Bayerwerk(DE)

(72) Erfinder: Heitz, Walter, Prof. Dr.
Am Schmidtborn 5
D-3575 Kirchhain(DE)

(72) Erfinder: Strohriegl, Peter
Hainweg 3
D-3553 Cölbe/Bürgeln(DE)

(54) **Verfahren zur Herstellung von Polybenzamiden.**

(57) Gegenstand der vorliegenden Erfindung sind ein Verfahren zur Herstellung von Poly-(1,4-benzamid) oder von Poly-(1.3-benzamid) im Gemisch mit $SiO_2$ aus 4-Aminobenzoesäure oder 3-Aminobenzoesäure, das dadurch gekennzeichnet ist, daß man diese in Gegenwart von $SiCl_4$ und tertiären, aromatischen Stickstoffheterocyclen polykondensiert, die im Gemisch mit $SiO_2$ anfallenden Polyamide sowie ein Verfahren zu deren Isolierung.



Croydon Printing Company Ltd.

BAYER AKTIENGESELLSCHAFT 5090 Leverkusen, Bayerwerk

Konzernverwaltung RP
Patentabteilung PS/m-c

## Verfahren zur Herstellung von Polybenzamiden

Gegenstand der Erfindung ist ein Verfahren zur Herstellung von Poly-(1.4-benzamid) oder von Poly-(1.3-benzamid), im Gemisch mit $SiO_2$ durch Polykondensation von 4-Aminobenzoesäure oder 3-Aminobenzoesäure, das dadurch gekennzeichnet ist, daß man 4-Aminobenzoesäure oder 3-Aminobenzoesäure in Gegenwart von $SiCl_4$ und tertiären, aromatischen Stickstoffheterocyclen, vorzugsweise Stickstoffbasen, als Lösungsmittel bei Temperaturen von 60°C bis 200°C, vorzugsweise von 100°C bis 150°C, und Drücken von 1 bis 10 Atmosphären, vorzugsweise von 1 Atmosphäre polykondensiert, wobei pro Mol Aminobenzoesäure 0,5 bis 2 Mol $SiCl_4$, vorzugsweise 0,5 bis 1 Mol $SiCl_4$ eingesetzt wird.

Polybenzamide sind bekannt. Ihre Synthese gelingt bis dato entweder nach einem mehrstufigen Verfahren (siehe beispielsweise Macromolecules 10, Seiten 1390 bis 1396 (1977)) oder mit relativ teuren Phosphorverbindungen (siehe beispielsweise N. Yamazaki, M. Matsumoto, F. Higashi, Journ. Polym. Sci.: Polym.Chem. Ed. 13, 1373 bis 1380 (1975), N. Yamazaki, F. Higashi, Advances in

Polym. Science 38, 1-25 (1981), F. Higashi, Y. Aoki, Y. Taguchi, Makrom. Chem. Rapid Commun. 2, 329-31 (1981), G. Wu, N. Ogata, Journ. Polym. Sci.: Polym. Letters Ed. 19, 343-45 (1981)).

Das erfindungsgemäße Verfahren läuft demgegenüber einstufig und ohne die Mitverwendung von Phosphorverbindungen.

Bei der Reaktion entstehen Gemische aus Polybenzamiden und $SiO_2$, die direkt zu Gebrauchsgegenständen verarbeitet werden können. Durch Lösen der Polyamide in $H_2SO_4$ oder N-Methylpyrrolidon/LiCl und Filtration kann das $SiO_2$ abgetrennt werden. Aus diesen Lösungen können die Polyamide in reiner Form in bekannter Weise isoliert werden.

Geeignete tertiäre, aromatische Stickstoffheterocyclen mit wenigstens einem N-Atom, vorzugsweise 2 N-Atomen im Ring und $C_3$-$C_6$ Ringgliedern, wobei die heterocyclischen Ringe noch mit aromatischen Ringen kondensiert sein können, sind beispielsweise Pyridin, Picoline, Lutidine, Chinolin und Isochinolin. Die Konzentration der Aminobenzoesäure im Stickstoffheterocyclus liegt zwischen etwa 0,1 und etwa 1,5 Mol/pro Liter Stickstoffheterocyclus.

Als Lösungsmittel können auch Gemische der aromatischen Stickstoffbasen mit unter den Reaktionsbedingungen inerten anderen Lösungsmitteln wie beispielsweise Chlorbenzol oder Decan verwendet werden.

Die Wahl der Temperatur kann in Abhängigkeit vom verwendeten Lösungsmittel erfolgen; bei Temperaturen über dem Siedepunkt des jeweils eingesetzten Lösungsmittels ist die Mitverwendung von Überdruck erforderlich.

Bevorzugte Variationen sind Pyridin oder Pyridin-Chlorbenzol-Gemische, wobei ohne Überdruck beim Siedepunkt der jeweiligen Lösungen gearbeitet wird.

Die erfindungsgemäße Umsetzung kann durch die folgende Reaktionsgleichung beschrieben werden:

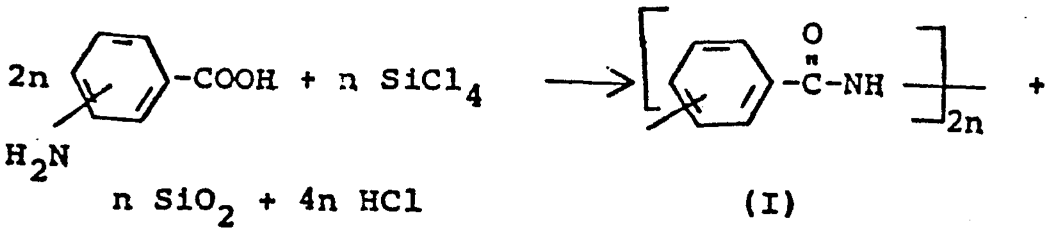

n $SiO_2$ + 4n HCl

(I)

Die Polykondensation kann zu Polykondensationsgraden von 2 bis etwa 400, bevorzugt 5 bis etwa 200 führen, d.h., in der oben angegebenen Gleichung ist n = 2 bis 400, bevorzugt 5 bis 200.

Die Regulierung der Molekulargewichte erfolgt im wesentlichen über das jeweils eingesetzte Molverhältnis Aminobenzoesäure zu $SiCl_4$.

Die erzielten Molekulargewichte werden über die inhärenten Viskositäten ermittelt, welche bei 30°C an Lösungen von 0.5 g Polyamid in 100 ml konzentrierter Schwefelsäure gemessen wurden.

Die Abtrennung der erhaltenen Polyamide und des $SiO_2$ von dem Lösungsmittel bzw. Lösungsmittelgemisch kann in bekannter Weise erfolgen, beispielsweise durch Ansäuern und Abfiltrieren. Die gegebenenfalls erwünschte Abtennung vom $SiO_2$ ist bereits vorher beschrieben.

Die erfindungsgemäß erhaltenen Polyamide mit oder ohne $SiO_2$-Gehalt sind in bekannter Weise technisch brauchbar, beispielsweise sind sie zur Herstellung von Pulps geeignet.

Beispiel A (entspricht Versuch 4 der nachfolgenden Tabelle)

Darstellung eines Poly-(1.4-benzamids)

6.46 g 4-Aminobenzoesäure werden in einem ausgeheizten 100 ml Dreihalskolben mit KPG Rührer, Rückflußkühler und Tropftrichter in 70 ml Pyridin gelöst. Unter Eiskühlung tropft man 3.37 ml Siliciumtetrachlorid zu und erhitzt anschließend für 48 Stunden zum Rückfluß. Zur Aufarbeitung wird das Reaktionsgemisch in 500 ml 2N HCl eingerührt, abgesaugt und gründlich mit Wasser und Aceton gewaschen. Nach dem Trocknen erhält man 7.38 g (100 %) eines Gemischs aus Poly-(1.4-benzamid) und Siliciumdioxid. Dieses Gemisch löst man in 300 ml konz. Schwefelsäure und filtriert über eine Glasfritte. Das Poly-(1.4-benzamid) wird in Wasser ausgefällt, abgesaugt, gründlich mit heißem Wasser, Methanol und Aceton nachgewaschen und getrocknet.
Ausbeute: 5.38 ≙ 96 %
inhärente Viskosität: 1.43

Unter Variation der Molverhältnisse der 4-Aminobenzoesäure, $SiCl_4$ und des Pyridins und der Reaktionszeit wurden unter sonst gleichen Bedingungen die anderen Versuche 1 bis 3 und 5 bis 6 der Tabelle durchgeführt.

Tabelle 1: Herstellung von Poly-(1.4-benzamiden) durch Kondensation von 4-Aminobenzoesäure mit Siliciumtetrachlorid.
Alle Reaktionen wurden in Pyridin am Rückfluß ausgeführt.

| Nr. | 4-ABA | | $SiCl_4$ | $[SiCl_4]$ / $[4\text{-}ABA]$ | Reaktionszeit | Ausbeute b) | inhärente Viskosität c) | $M_{Vis}$ d) |
|---|---|---|---|---|---|---|---|---|
| | mMol | Mol/L x) | mMol | | Std. | % | $dl\ g^{-1}$ | |
| 1 | 34.8 | 0.70 | 17.4 | 0.50 | 20 | 50 | 0.27 | Oligomere |
| 2 | 52.1 | 0.74 | 26.2 | 0.50 | 20 | 49 | 0.31 | Oligomere |
| 3 | 47.1 | 0.67 | 26.2 | 0.55 | 40 | 75 | 0.69 | 7.200 |
| 4 | 47.2 | 0.67 | 29.4 | 0.62 | 48 | 100 | 1.43 | 11.200 |
| 5 | 47.1 | 1.00 | 29.9 | 0,63 | 120 | 99 | 1.97 | 13.400 |
| 6 | 50.0 | 0.83 | 40.0 | 0.80 | 40 | 99 | 1.65 | 12.100 |

a) 4-ABA: 4-Aminobenzoesäure

b) berechnet aus der Summe von Polybenzamid und $SiO_2$

c) gemessen in konz. $H_2SO_4$ bei 30°C, $c=0.5\ g\ dl^{-1}$

d) berechnet aus der inhärenten Viskosität mit $K=1.9 \cdot 10^{-7}$ und a=1.7

x) Konzentration der 4-Aminobenzoesäure in Pyridin

## Beispiel B

Darstellung eines Poly-(1.3-benzamids)

7.16 g 3-Aminobenzoesäure werden in einem ausgeheizten 100 ml Dreihalskolben mit KPG Rührer, Rückflußkühler und Tropftrichter in 75 ml Pyridin gelöst. Unter Eiskühlung tropft man 3.71 ml Siliciumtetrachlorid zu und erhitzt anschließend für 48 Stunden zum Rückfluß. Zur Aufarbeitung wird das Reaktionsgemisch in 500 ml 2 N HCl eingerührt, abgesaugt und gründlich mit Wasser, Methanol und Aceton gewaschen. Nach dem Trocknen erhält man 8.08 g (99 %) eines Gemischs aus Poly-(1.3-benzamid) und Siliciumdioxid. Dieses Gemisch löst man in 300 ml konz. Schwefelsäure und filtriert über eine Glasfritte. Das Poly-(1.3-benzamid) wird in Wasser ausgefällt, abgesaugt, gründlich mit heißem Wasser, Methanol und Aceton nachgewaschen und getrocknet.
Ausbeute: 5.91 g ≙ 95 %
inhärente Viskosität: 0.58

Patentansprüche:

1. Verfahren zur Herstellung von Poly-(1,4-benzamid) oder von Poly-(1,3-benzamid) in Gemisch mit $SiO_2$ durch Polykondensation von 4-Aminobenzoesäure bzw. 3-Aminobenzoesäure, dadurch gekennzeichnet, daß man 4-Aminobenzoesäure oder 3-Aminobenzoesäure in Gegenwart von $SiCl_4$ und tertiären, aromatischen Stickstoffheterocyclen als Lösungsmittel bei Temperaturen von 60°C bis 200°C und Drücken von 1 bis 10 Atmosphären polykondensiert, wobei pro Mol Aminobenzoesäure 0,5 bis 2 Mol $SiCl_4$ eingesetzt wird.

2. Verfahren gemäß Anspruch 1, dadurch gekennzeichnet, daß pro Mol Aminobenzoesäure 0,5 bis 1 Mol $SiCl_4$ eingesetzt wird.

3. Verfahren gemäß Ansprüchen 1 und 2, dadurch gekennzeichnet, daß als Lösungsmittel Gemische der aromatischen Stickstoffheterocyclen, vorzugsweise Stickstoffbasen, mit unter den Reaktionsbedingungen inerten anderen Lösungsmitteln verwendet werden.

4. Verfahren gemäß Ansprüchen 1 bis 3, dadurch gekennzeichnet, daß als Lösungsmittel Pyridin oder Pyridin-Chlorbenzolgemische verwendet werden.

5. Poly-(1.4-benzamide) oder Poly-(1.3-benzamide) im Gemisch mit $SiO_2$ erhältlich gemäß den Verfahren der Ansprüche 1 - 4.

6. Verfahren zur Isolierung von Poly-(1,4-benzamid) oder Poly-(1,3-benzamid) gemäß Anspruch 5, dadurch gekennzeichnet, daß man das Polyamid aus dem Gemisch mit $SiO_2$ mit Hilfe von $H_2SO_4$ oder N-Methylpyrrolidon/LiCl löst, durch Filtration vom $SiO_2$ abtrennt und anschließend in bekannter Weise isoliert.